# EUROPÄISCHE PATENTSCHRIFT

(11) **EP 0 684 409 B1**
(45) Veröffentlichungstag und Bekanntmachung des Hinweises auf die Patenterteilung: **06.08.1997**
(21) Anmeldenummer: 95107096.0
(22) Anmeldetag: 11.05.1995
(51) Int. Cl.: F16H 57/08, F16C 33/66, F16C 33/58

(54) **Planetenradträger-Anordnung mit einer ringförmigen Ölstauscheibe**
Satellite carrier with lubricant collecting oil ring
Porte satellites avec anneau collecteur de lubrifiant

(30) Priorität: 28.05.1994 DE 4418693
(43) Veröffentlichungstag der Anmeldung: 29.11.1995
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR)
(72) Erfinder: Wehren, Wilhelm, D-50171 Kerpen/Blatzheim (DE); Premiski, Vladimir, D-53909 Zuelpich (DE)
(74) Vertreter: Messulam, Alec Moses

(56) Entgegenhaltungen:
- DE-A- 274 874
- DE-A- 3 339 040
- DE-A- 4 302 844
- DATABASE WPI Section PQ, Week 9237 28.Oktober 1992 Derwent Publications Ltd., London, GB; Class Q62, AN 92-306422 & SU-A-1 684 550 (KLASYKASOV) , 15.Oktober 1991

## Beschreibung

Die Erfindung bezieht sich auf eine Planetenradträger-Anordnung mit einer ringförmigen Ölstauscheibe, der im Oberbegriff des Patentanspruches 1 erläuterten Art.

Aus der EP-A 0 274 874 ist eine derartige Planetenradträger-Anordnung mit einer ringförmigen Ölstauscheibe bekannt, die an einem Bereich radial außerhalb der Planetenradbolzen an einem Seitenwandbauteil des Planetenradträgers festgelegt ist und sich radial so weit nach innen erstreckt, daß ihre Innenkante die an den Planetenradbolzen vorgesehenen axialen Schmierölkanäle nach innen übergreift, um Schmieröl zu den Nadellagern der Planetenräder zu führen und wobei die Planetenradbolzen in den beiden Seitenwandbauteilen des Planetenradträgers festgelegt sind.

Bei der bekannten Planetenradträger-Anordnung sind die Planetenradbolzen durch einen mit der Ölstauscheibe zusammenwirkenden Sicherungsring sowohl axial als auch verdrehsicher festgelegt und weisen eine axiale Sackbohrung und zumindest eine diese anschneidende Radialbohrung auf.

Aus der EP-A 609 659, veröffentlicht am 10.08.94, ist eine Planetenradträger-Anordnung mit einer ringförmigen Ölstauscheibe bekannt, die an einem Bereich radial außerhalb der Planetenradbolzen an einem Seitenwandbauteil des Planetenradträgers festgelegt ist und sich radial soweit nach innen erstreckt, daß ihre Innenkante die an den Planetenradbolzen vorgesehenen axialen Schmierölkanäle nach innen übergreift, um Schmieröl zu den Nadellagern der Planetenräder zu führen und die Planetenradbolzen sind an den beiden Seitenwandbauteilen des Planetenradträgers durch radiales Verstemmen von an den Enden der Planetenradbolzen ausgebildeten kegelförmigen Ausnehmungen festgelegt und weisen eine axiale Sackbohrung und zumindest eine diese anschneidende Radialbohrung auf.

Bei beiden bekannten Planetenradträger-Anordnungen müssen die in den Planetenradbolzen ausgebildeten axialen und radialen Schmierölkanäle als axiale Sackbohrungen und radiale Austrittsbohrungen ausgebildet werden, was einen erheblichen Bearbeitungsaufwand erfordert.

Weiterhin ist es bei Rollenlagern bekannt, in den Laufringen schrägverlaufende Spiral-Schmierölnuten einzubringen, SU-A 1 684 550.

Das Ziel der Erfindung ist es, eine Planetenradträger-Anordnung der im Oberbegriff des Patentanspruches 1 erläuterten Art zu schaffen, bei der die für die Schmierölzufuhr zu den Nadellagern der Planetenräder erforderlichen Schmierölkanäle mit einem Minimum an Bearbeitungsaufwand hergestellt werden können.

Gemäß der Erfindung wird dieses Ziel erreicht, indem bei einer Planetenradträger-Anordnung gemäß dem Oberbegriff des Patentanspruches 1 die im Kennzeichenteil des Patentanspruches 1 aufgezeigten Merkmale angewendet werden.

In den Ansprüchen 2 und 3 sind weitere Einzelheiten der Erfindung erläutert.

Dadurch, daß die an den Planetenradbolzen vorgesehenen Schmierölkanäle als an deren von den Nadeln der Nadellager unbelasteten Bereich des Außenumfanges spiralförmig verlaufend angeordnete, offene Schmierölnuten ausgebildet sind, wird eine wesentlich vereinfachte Herstellung ermöglicht und darüber hinaus noch eine erwünschte Förderwirkung durch die über die spiralförmige Schmierölnut hinweglaufenden Nadeln der Nadellagerung der Planetenräder erzielt.

Dadurch, daß der Winkel der spiralförmig verlaufenden Schmierölnuten etwa 15° zur Längsachse der Planetenradbolzen liegt, wird ein Überlaufen der Nadeln der Nadellagerung ohne störende Stoßerscheinungen sichergestellt.

Die am Außenumfang der Planetenradbolzen verlaufende offene Schmierölnut kann durch eine entsprechende Montagevorrichtung beim Einsetzen der Planetenradbolzen in den Planetenradträger zur Lagebestimmung verwendet werden, damit die Planetenradbolzen im Planetenradträger derart montiert werden, daß die offene Schmierölnut stets zu der von den Nadeln der Nadellager unbelasteten Seite montiert wird. Darüber hinaus verbessern die offenen Schmierölnuten die drehfeste Festlegung der durch radiales Aufweiten festgelegten Planetenradbolzen.

Die Erfindung wird anhand eines in der beiliegenden Zeichnung gezeigten Ausführungsbeispieles näher erläutert. Es zeigt:
- Fig. 1: einen vertikalen Schnitt durch eine Planetenradträger-Anordnung mit einer ringförmigen Ölstauscheibe und der Planetenradbolzenanordnung gemäß der Erfindung;
- Fig. 2: eine Draufsicht auf einen Planetenradbolzen in Richtung des Pfeiles II in Fig. 1 und
- Fig. 3: einen Schnitt entlang der Linie III-III in Fig. 2.

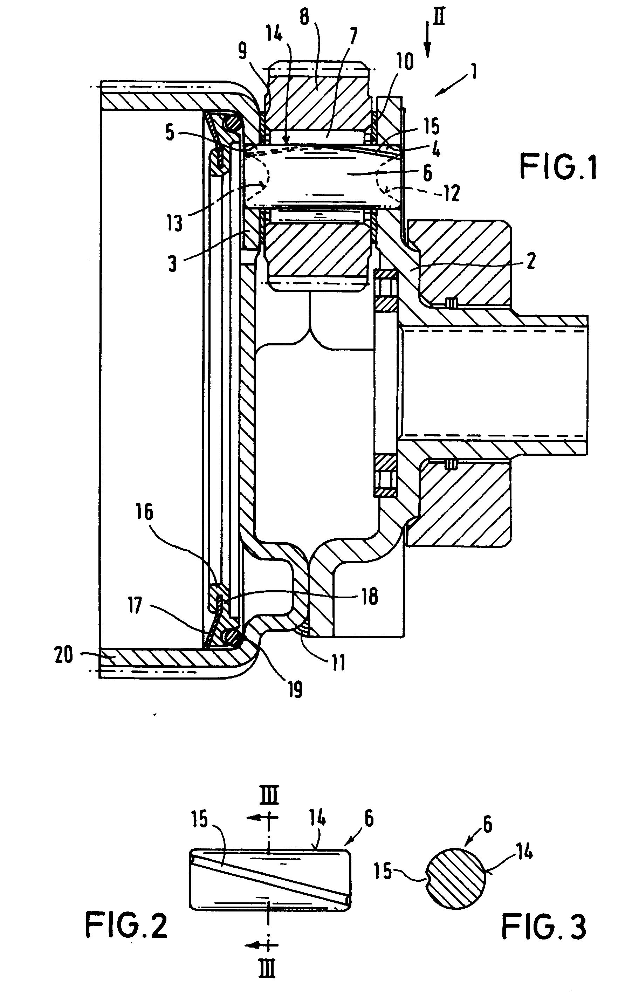

In Fig. 1 ist eine Planetenradträger-Anordnung 1 gezeigt, die im wesentlichen aus einem Planetenradträger-Nabenbauteil 2 und einem gegenüberliegenden Seitenwandbauteil 3 besteht, die in entsprechenden Bohrungen 4 bzw. 5 eine Mehrzahl von Planetenradbolzen 6 aufnehmen, auf denen über Nadellager 7 Planetenräder 8 drehbar gelagert sind.

Zwischen dem Nabenbauteil 2 und dem Seitenwandbauteil 3 und den Planetenrädern 8 sind in bekannter Weise Anlaufscheiben-Anordnungen 9 und 10 vorgesehen. Die beiden Planetenradträger-Bauteile, das Nabenbauteil 2 und das Seitenwandbauteil 3 können z.B. als Fließpreßbauteile bzw. als Blechpreßbauteile ausgebildet sein und werden zum Bilden des Plantenradträgers miteinander bei 11 verschweißt.

Die Planetenradbolzen 6 weisen an ihren Enden konische Ansenkungen 12 und 13 auf, über die sie durch radiales Aufweiten in den Bohrungen 4 und 5 der Planetenradbauteile 2 und 3 festgelegt werden.

Die Planetenradbolzen 6 sind an ihrem Außenumfang 14 in dem durch die Nadeln der Nadellager 7 unbelasteten Bereich mit einer sich spiralförmig schräg erstreckenden, offenen Schmierölnut 15 versehen.

Die Ölstauscheibe 16 besteht im aufgezeigten Ausführungsbeispiel aus einem selbstsichernden Konusring 17, einem Kunststoffteil 18 und einem O-Ring 19 und ist in einem mit dem Seitenwandbauteil 3 einstückig ausgebildeten Trommelbauteil 20 angeordnet.

Die Tiefe der offenen Schmierölnut 15 am Außenumfang 14 der Planetenradbolzen 6 muß so ausgelegt werden, daß beim Montieren der Planetenradbolzen 6 in den Öffnungen 4 und 5 des Planetenradträgers und dem nachfolgenden radialen Aufweiten der konischen Ansenkungen 12 und 13 noch ein ausreichender Querschnitt an der Eintrittseite verbleibt. An der Austrittsseite der Schmierölnut kann ggf. der Querschnitt soweit verringert werden, daß ein Schmierölaustritt an dieser Stelle vermieden wird.

Die Herstellung der offenen Schmierölnut 15 kann auf einfache Weise, z.B. durch Profilschleifen der Schmierölnut erfolgen, es kann aber auch bereits ein Ausgangsmaterial (Draht) verwendet werden, das diese Form aufweist (Draht bereits mit Nut gezogen) und wobei der Planetenradbolzen daraus im normalen Bolzen-Fertigungsprozeß hergestellt wird.

Die an dem Planetenradbolzen vorhandene offene Schmierölnut 15 wird bei einer automatischen Montage der Planetenradbolzen im Planetenradträger dazu verwendet, die Lage der Planetenradbolzen derart auszurichten, daß die Schmierölnut 15 stets in der radial nach außen gerichteten durch die Nadeln des Nadellagers 7 unbelastete Seite des Planetenradbolzens 6 zu liegen kommt, so daß beim Überlaufen der Nadeln des Nadellagers 7 kaum störende Stoßeinwirkungen auftreten.

Dadurch, daß die spiralförmig, schräg verlaufende offene Schmierölnut 15 bis an die Enden der Planetenradbolzen 6 durchgeführt wird, wirken die Endbereiche der Schmierölnut 15 im Zusammenhang mit dem zum Befestigen der Planetenradbolzen 6 vorgesehenen radialen Aufweiten der Ansenkungen 12 und 13 der Planetenradbolzen als willkommene Verdrehsicherungen dieser Verbindung.

Die offene Schmierölnut 15 kann ggf. einen sich von der Schmieröl-Eintrittsseite zur -Austrittsseite stetig abnehmenden Querschnitt aufweisen.

## Patentansprüche

1. Planetenradträger-Anordnung mit einer ringförmigen Ölstauscheibe (16), die an einem Bereich radial außerhalb der Planetenradbolzen (6) an einem Seitenwandbauteil (3) des Planetenradträgers (1) festgelegt ist und sich radial so weit nach innen erstreckt, daß ihre Innenkante einen an jedem Planetenradbolzen (6) vorgesehenen, axialen Schmierölkanal nach innen übergreift, um Schmieröl zu Nadellagern (7) der Planetenräder (8) zu führen, wobei die Planetenradbolzen (6) in Bohrungen (4 und 5) in den beiden Seitenwandbauteilen (2 und 3) des Planetenradträgers (1) festgelegt sind,
**dadurch gekennzeichnet**, daß
- der an jedem Planetenradbolzen (6) vorgesehene Schmierölkanal als an dessen Außenumfang (14) in einem von den Nadeln der Nadellager (7) unbelasteten Bereich spiralförmig, schräg verlaufende offene Schmierölnut (15) ausgebildet ist.

2. Planetenradträger-Anordnung nach Anspruch 1,
**dadurch gekennzeichnet**, daß
- der Winkel der spiralförmig, schräg verlaufenden, offenen Schmierölnut (15) zur Längsachse des Planetenradbolzens (6) etwa 15° beträgt.

3. Planetenradträger-Anordnung nach den Ansprüchen 1 und 2
**dadurch gekennzeichnet**, daß
- die am Außenumfang (14) des Planetenradbolzens (6) spiralförmig, schrägverlaufende, offene Schmierölnut (15) einen von ihrem Eintrittsbereich benachbart der Ölstauscheibe (16) zum gegenüberliegenden Endbereich abnehmenden Querschnitt aufweist.

4. Planetenradträger-Anordnung nach den Ansprüchen 1 bis 3
**dadurch gekennzeichnet**, daß
- die am Außenumfang (14) des Planetenradbolzens (6) spiralförmig verlaufende, offene Schmierölnut (15) durch Profilschleifen oder dergleichen hergestellt wird.

5. Planetenradträger-Anordnung nach den Ansprüchen 1 und 2
**dadurch gekennzeichnet**, daß
- die am Außenumfang (14) des Planetenradbolzens (6) spiralförmig verlaufende, offene Schmierölnut (15) durch Verwendung eines bereits die Nut aufweisendes Ausgangsmaterials bei der Herstellung der Planetenradbolzen (6) erstellt wird.

## Claims

1. A planet carrier having an annular oil-collecting disc (16) which is secured in a region radially outside the planet gear pins (6) to a side wall part (3) of the planet carrier (1) and extends radially inwardly so far that its inner edge overlaps the axial lubricating oil ducts with which each of the planet gear pins (6) is provided in order to lead lubricating oil to needle bearings (7) of the planet gears (8), the planet gear pins (6) being secured in bores (4 and 5) in the two side wall parts (2 and 3) of the planet carrier (1),
characterised in that
- the lubricating oil duct with which each planet gear pin (6) is provided is in the form of a helical, open lubricating oil groove (15) extending obliquely on its outer circumference (14) in a region not under load from the needles of the needle bearing (7).

2. A planet carrier according to claim 1,
characterised in that
- the angle of the helical, obliquely extending open lubricating oil groove (15) to the longitudinal axis of the planet gear pin (6) is about 15°.

3. A planet carrier according to one of claims 1 and 2,
characterised in that
- the helical open lubricating oil groove (15) extending obliquely on the outer circumference (14) of the planet gear pin (6) has a cross-section which decreases from the inlet region adjacent the oil-collecting disc (16) to the opposite end region.

4. A planet carrier according to one of claims 1 to 3,
characterised in that
- the open lubricating oil groove (15) extending helically on the outer circumference (14) of the planet gear pin (6) is made by profile grinding or the like.

5. A planet carrier according to one of claims 1 and 2,
characterised in that
- the open lubricating oil groove (15) extending helically on the outer circumference (14) of the planet gear pin (6) is obtained by the use in the manufacture of the planet gear pin (6) of a starting material which already exhibits the groove.

## Revendications

1. Ensemble de porte-satellites, avec une bague collectrice de lubrifiant (16) de forme annulaire qui est fixée en position dans une région située radialement à l'extérieur des axes de pignons satellites (6), sur un élément de paroi latérale (3) du porte-satellites (1), et qui s'étend suffisamment radialement vers l'intérieur pour que son bord intérieur recouvre vers l'intérieur un canal axial de lubrifiant prévu sur chaque axe de pignon satellite (6), afin de diriger du lubrifiant vers des roulements à aiguilles (7) des pignons satellites (8), les axes de pignons satellites (6) étant fixés en position dans des perçages (4 et 5) dans les deux éléments de parois latérales (2 et 3) du porte-satellites (1), **caractérisé** en ce que le canal de lubrifiant prévu sur chaque axe de pignon satellite (6) est réalisé sous la forme d'une rainure ouverte de lubrifiant (15) s'étendant en oblique et en spirale sur la périphérie extérieure (14) de cet axe dans une région non sollicitée par les aiguilles des roulements à aiguilles (7).

2. Ensemble de porte-satellites selon la revendication 1, **caractérisé** en ce que l'angle, par rapport à l'axe longitudinal de l'axe de pignon satellite (6), de la rainure ouverte de lubrifiant (15) s'étendant en oblique et en spirale est égal à environ 15°.

3. Ensemble de porte-satellites selon les revendications 1 et 2, **caractérisé** en ce que la rainure ouverte de lubrifiant (15) s'étendant en oblique et en spirale sur la périphérie extérieure (14) de l'axe de pignon satellite (6) présente une section qui diminue depuis sa région d'entrée, au voisinage de la bague collectrice de lubrifiant (16), vers la région terminale opposée.

4. Ensemble de porte-satellites selon les revendications 1 à 3, **caractérisé** en ce que la rainure ouverte de lubrifiant (15) s'étendant en oblique et en spirale sur la périphérie extérieure (14) de l'axe de pignon satellite (6) est fabriquée par rectification de profil ou usinage analogue.

5. Ensemble de porte-satellites selon les revendications 1 et 2, **caractérisé** en ce que la rainure ouverte de lubrifiant (15) s'étendant en oblique et en spirale sur la périphérie extérieure (14) de l'axe de pignon satellite (6) est réalisée en utilisant, pour la fabrication de l'axe de pignon satellite (6), un matériau de départ présentant déjà la rainure.
